# EUROPÄISCHE PATENTSCHRIFT

(11) **EP 2 632 684 B1**
(45) Veröffentlichungstag und Bekanntmachung des Hinweises auf die Patenterteilung: **15.03.2017**
(21) Anmeldenummer: 11784960.4
(22) Anmeldetag: 26.10.2011
(51) Int. Cl.: B29C 45/67, B29C 45/17

(54) **SCHLIESSEINHEIT**
CLOSING UNIT
UNITÉ DE FERMETURE

(30) Priorität: 28.10.2010 DE 102010049970
(43) Veröffentlichungstag der Anmeldung: 04.09.2013
(73) Patentinhaber: KraussMaffei Technologies GmbH, 80997 München (DE)
(72) Erfinder: HÖRNLA, Robert, 85253 Kleinberghofen (DE)
(74) Vertreter: Wilhelm, Ludwig
(86) Internationale Anmeldenummer: PCT/EP2011/068804
(87) Internationale Veröffentlichungsnummer: WO 2012/055939

(56) Entgegenhaltungen:
- JP-A- 6 297 526
- JP-A- 2009 051 090
- US-A- 5 135 385
- US-A1- 2005 025 856

## Beschreibung

Die Erfindung betrifft eine Schließeinheit für eine Spritzgießmaschine gemäß dem Oberbegriff von Patentanspruch 1.

Bei Schließeinheiten gemäß dem Stand der Technik ist zum Einen die sogenannte Backenverriegelung bekannt, bei der zwei halbringförmige und jeweils eine Verzahnung aufweisende Verriegelungsbacken in eine entsprechende Verzahnung an einer Säule der Schließeinheit ein- und ausgefahren werden. Dies kann durch Verfahrbewegungen senkrecht zur Längsachse der Säule erfolgen, wobei die Verzahnung an der Säule in der Regel von umlaufenden Ringnuten in der Säule gebildet wird (EP1343975B1 US 2005/025856 A,

DE20006618U1). Des Weiteren sind Backenverriegelungen bekannt, bei denen die Verriegelungsbacken an einer außerhalb der Säule liegende Achse drehbar befestigt sind und mittels einer Schwenk- oder Drehbewegung um die vorgenannte Achse in die Ringnuten der Säule ein- und ausgefahren werden können (US6231329B1, DE2455702A1).

Des Weiteren gibt es im Stand der Technik Schließeinheiten mit einer sogenannten Drehverriegelung, bei der die Säulen eine Verzahnung aufweisen, die über den Umfang gesehen Unterbrechungen aufweist, wobei diese Unterbrechungen in Längsrichtung der Säule auf einer Linie hintereinander angeordnet sind und eine durchgehende Längsnut in der verzahnten Säule bilden. Eine Verriegelungsmutter weist eine in gleicher Weise ausgebildete Verzahnung auf. Durch Verdrehen der Verriegelungsmutter um die Längsachse der Säule kann deren Verzahnung zum Einen in eine Offenstellung gebracht werden, in der sie sich in den Längsnuten der Säule befindet, so dass eine freie Relativbewegung von Säule und Verriegelungsmutter möglich ist. Zum anderen kann sie durch Verdrehen in eine Schließ- bzw. Verriegelungsstellung gebracht werden, in der die Verzahnung an der Verriegelungsmutter im Eingriff mit der Verzahnung an der Säule steht (EP0942821 B1, DE1 02005003566A1).

Bei den bekannten Schließeinheiten sind die Nuten in den Säulen in der Regel immer etwas größer als die Breite der Zähne der Verriegelungselemente, d.h. es liegt immer ein gewisses Spiel vor, bis im eingefahrenen Zustand der Verriegelungselemente deren Kontakt- und Kraftübertragungsflächen mit den zugehörigen Kontakt- und Kraftübertragungsflächen der Stege einer Säule aneinanderstossen. Um eine schnelle Verriegelung realisieren zu können, ist man bestrebt, das vorgenannte Spiel möglichst klein zu halten. Andererseits werden dadurch höhere Anforderungen an die Positioniergenauigkeit gestellt, d.h. die Verriegelungselemente müssen mit ihren Zähnen genau über den Nuten der Säule positionert werden können. Wird die Säule in der beweglichen Formaufspannplatte zusätzlich geführt, tritt beim Verfahren der beweglichen Formaufspannplatte eine Reibung zwischen der Säule und der beweglichen Formaufspannplatte auf, was sich nachteilig auf die Positioniergenauigkeit auswirkt, da die dabei erzeugte Kraft auf das Druckkissen in dem Schließkraftzylinder übertragen wird und die Ölfeder in dem Druckkissen gestaucht oder gedehnt wird, je nachdem in welche Richtung die Kraft wirkt.

Ausgehend von diesem Stand der Technik liegt der Erfindung die Aufgabe zugrunde, eine Schließeinheit anzugeben, die sich durch eine verbesserte Positioniergenauigkeit zwischen Säule und Verriegelungselementen auszeichnet und die damit eine schnellere Verriegelung gegenüber den bekannten Schließeinheiten ermöglicht.

Die Lösung dieser Aufgabe erfolgt durch eine Schließeinheit mit den Merkmalen von Anspruch 1. Vorteilhafte Weiterentwicklungen und Ausgestaltungen finden sich in den Unteransprüchen.

Dadurch, dass eine Feststelleinrichtung vorgesehen ist, mit der die Position der Säulen relativ zu dem jeweiligen Schließkraftzylinder fixiert werden kann, wird die Ölfeder in dem Schließkraftzylinder quasi ausgeschaltet und die Säule nimmt eine exakte Position ein. Für die Fixierung der Position der Säule ist eine geeignete kraftschlüssige Verbindung vorgesehen, beispielsweise nach Art einer Feststellbremse. Die Fixierung der Position der Säule kann mechanisch erfolgen. Beispielhaft können an der Formaufspannplatte mit den Schließkraftzylindern, insbesondere auf Seiten des Formaufspannraums, mit den Säulen verklemmbare Klemmelemente, beispielsweise nach Art von Bremsbacken, vorgesehen sein. Alternativ dazu oder ergänzend dazu können an dem Schließkraftzylinder Klemmelemente vorgesehen sein, die mit einem aus dem Schließkraftzylinder herausgeführten und mit der Säule fest verbundenen Stangenelement verklemmbar sind, beispielsweise nach Art von Bremsbacken.

In einer weiteren Ausführungsform ist vorgesehen, dass die Kolben in dem jeweiligen Schließkraftzylinder jeweils mit einer Spindel-Mutter-Kombination versehen sind, wobei entweder die Spindelmutter drehfest mit dem Kolben verbunden ist und die Spindel bei einer Bewegung der Säule relativ zu dem Schließkraftzylinder entlang der Längsachse der Säule in Rotation versetzt wird, oder wobei die Spindel drehfest mit dem Kolben verbunden ist und die Spindelmutter bei einer Bewegung der Säule relativ zu dem Schließkraftzylinder entlang der Längsachse der Säule in Rotation versetzt wird, und dass eine Blockiereinrichtung vorgesehen ist, mit der die Rotation des rotierenden Teils der jeweiligen Spindel-Mutter-Kombination blockiert werden kann. Auf diese Weise wird die Säule hydraulisch positioniert, aber über die blockierte Spindel-Mutter-Kombination mechanisch festgestellt. Die Ölfeder mit ihren oben genannten Nachteilen bei der Positioniergenauigkeit wird ausgeschaltet.

In einer Ausführungsform kann die Blockierreinrichtung eine mit dem rotierenden Teil der jeweiligen Spindel-Mutter-Kombination drehfest verbundene und mit diesem Teil mitrotierende Bremsscheibe und eine die Bremsscheibe arretierbare Bremse umfassen.

Gegebenenfalls kann ein Inkrementalgeber an dem rotierenden Teil der Spindel-Mutter-Kombination vorgesehen werden.

In einer zweckmäßigen Ausführungsform kann die Mutter der jeweiligen Spindel-Mutter-Kombination drehfest mit dem Kolben bzw. der Säule verbunden sein, und in dem als Kolben ausgebildeten Endabschnitt der Säule kann eine Ausnehmung vorgesehen sein, in die die Spindel beim Verfahren der Säule innerhalb des Schließkraftzylinders eintauchen kann.

In einer bevorzugten Ausführungsform, die speziell für Zwei-Platten-Schließeinheitn geeignet ist, können die Schließkraftzylinder an der feststehenden Formaufspannplatte und die Verriegelungselemente an der beweglichen Formaufspannplatte vorgesehen sein.

Eine für die Fixierung der Säulen geeignete Stellung der Säulen kann beispielsweise dann vorliegen, wenn die Schließkraft gerade abgebaut ist und die Verriegelungselemente sich noch in der in die Säule eingefahrenen Stellung befinden. In dieser Position der Säulen würde im umgekehrten Fall, d.h. wenn die Verriegelungselemente aus ihrer Offenstellung in die Säulen eingefahren werden, kein Spiel zwischen den Kontakt- und Kraftübertragungsflächen der Verriegelungselemente einerseits und den Kontakt- und Kraftübertragungsflächen in den Säulen andererseits vorliegen. Beim Betätigen des Schließzylinders läge also praktisch kein Spiel vor und es ergäbe sich die kürzestmögliche Zeit zum Schließkraftaufbau. Die so ermittelte Stellung der Säulen bildet den Idealfall für diejenige Position der Säulen relativ zu dem jeweiligen Schließzylinder, die erfindungsgemäß fixiert werden soll. Gegebenenfalls kann die so ermittelte Stellung um einen geringe Wegstrecke verschoben werden, um ein gewisses Mindestmaß an Abstand zwischen den vorgenannten Kontakt- und Kraftübertragungsflächen zu haben. Damit kann erreicht werden, dass einerseits in der eingefahrenen Stellung der Verriegelungselemente nur ein minimal notwendiges Spiel zwischen den Kontakt- und Kraftübertragungsflächen vorliegt, dass aber andererseits eine Kollision beim Einfahren der Verriegelungselemente in die Säulen sicher vermieden werden kann.

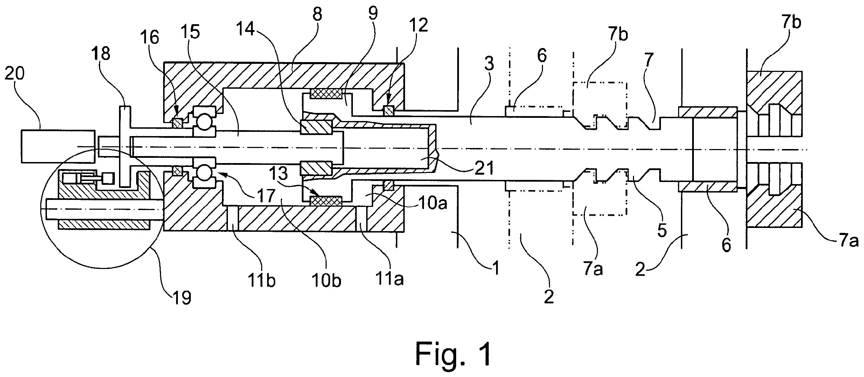

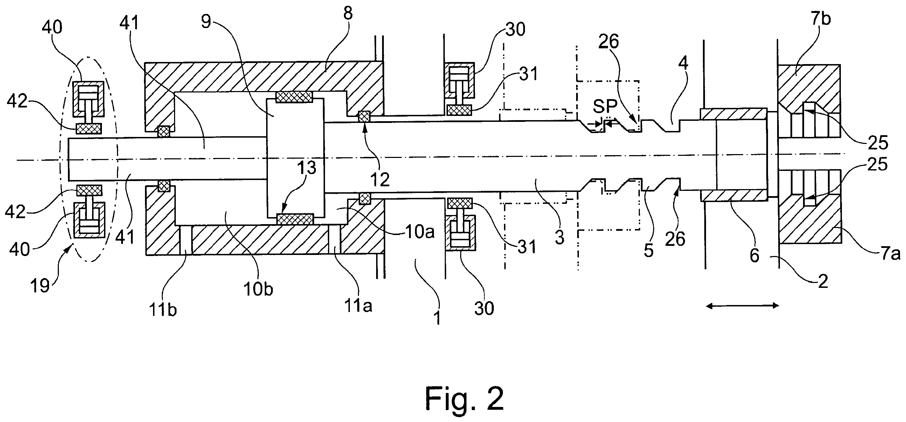

Nachfolgend soll die Erfindung anhand von Ausführungsbeispielen und unter Bezugnahme auf die Figuren 1 und 2 näher beschrieben werden. In den Figuren 1 und 2 ist hierbei lediglich der zur Erläuterung der Erfindung relevante Teil einer Schließeinheit dargestellt. Eine Schließeinheit kann mehrere der erfindungsgemäßen Säulen mit feststellbarem Druckkissen aufweisen. Üblicherweise weist eine Schließeinheit vier Säulen auf, die in den Eckbereichen der Formaufspannplatten angordnet sind.

Eine erfindungsgemäße Schließeinheit gemäß dem in der Figur 1 dargestellten ersten Ausführungsbeispiel umfasst eine feststehende Formaufspannplatte 1 und eine bewegliche Formaufspannplatte 2, die mit an sich bekannten Antriebsmitteln gegenüber der feststehenden Formaufspannplatte 1 verfahren werden kann, wie dies mit dem Doppelpfeil unterhalb der beweglichen Formaufspannplatte angedeutet ist. Zwischen den beiden Formaufspannplatten 1 und 2 sind Säulen 3 vorgesehen, die jeweils an ihrem der bewegichen Formaufspannplatte zugewandten Ende einen Abschnitt mit einer Verzahnung aus Nuten 4 und Stegen 5 aufweisen. Die Säule 3 kann durch eine mit einer Gleitbuchse 6 versehende Ausnehmung in der beweglichen Formaufspannplatte hindurchgeführt werden. Auf der dem Formaufspannraum abgewandten Seite der beweglichen Formaufspannplatte 2 sind Verriegelungselemente 7a und 7b vorgesehen, die in an sich bekannter Weise in die Säule 3 ein- und ausgefahren werden können. Die Darstellung mit den durchgezogenen Linien und den schraffierten Flächen zeigt die Situation in der Offenstellung der Verriegelungselemente, d.h. bei ausgefahrenen Verriegelungselementen, bei der die Säulen frei gegenüber den Verriegelungselementen 7a und 7b bewegbar sind. Die Darstellung mit den gestrichelten Linien zeigt die Situation in der Verriegelungsstellung, d.h. in der eingefahrenen Stellung der Verriegelungselemente 7a und 7b, bei der die Schließeinheit mit einer Schließkraft beaufschlagt werden kann. An der feststehenden Formaufspannplatte 1 ist ein Schließkraftzylinder 8 auf der dem Formaufspannraum abgewandten Seite vorgesehen. Die Säule 3 ist durch die feststehende Formaufspannplatte 1 hindurchgeführt und ragt in das Innere des Schließkraftzylinders 8 hinein. An ihrem dortigen Ende ist die Säule 3 mit einem Kolben 9 versehen oder als solcher geformt. Desweiteren ist eine Ausnehmung in Form eines Sacklochs 21 in Säule und Kolben vorgesehen. Der Kolben 9 trennt den Schließkraftzylinder 8 in zwei Druckräume 10a und 10b, die jeweils mit einem Druckmittel wie zum Beispiel einem Hydrauliköl gefüllt und unter Druck gesetzt werden können. Hierzu sind in der Wand des Schließkraftzylinders 8 Öffnungen 11 a und 11 b für den Anschluss von Druckmittelleitungen vorgesehen. Der Druckraum 10a dient zum Schließkraftaufbau und der Druckraum 10b zum Losreissen der Formaufspannplatten voneinander. Desweiteren sind Dichtringe 12 und 13 an der Säule und dem Kolben vorhanden. In dem Kolben 9 ist eine Mutter 14 einer Spindel-Mutter-Kombination drehfest und koaxial zur Längsachse der Säule 3 eingebaut und steht mit ihrem Gewinde im Eingriff mit der zugehörigen Spindel 15. Letztere ist über einen Drichtring 16 und ein Drehlager 17 aus dem Schließkraftzylinder herausgeführt. An ihrem aus dem Schließkraftzylinder 8 herausragenden Ende ist die Spindel 15 mit eine Bremsscheibe 18 versehen, die bei einer Rotation der Spindel 15 mit dieser mitgedreht wird. Die Spindel verfügt vorzugsweise über eine hohe Gewindesteigung, um deren Drehbewegung zu erleichtern. Mittels einer Bremse 19 kann die Bremsscheibe 18 blockiert und somit eine Drehbewegung der Spindel 15 unterbunden werden. Die Bremse 19 kann in vielfältiger Weise ausgestaltet sein. In der Figur sind zwei Bremsbacken vorgesehen, die im zusammengedrückten Zustand die Bremsscheibe 18 blockieren. Optional kann an der Spindel 15 auch ein Inkrementalgeber 20 vorgesehen werden.

Nachfolgend soll die Betriebsweise der erfindungsgemäßen Schließeinheit beschrieben werden. Ausgehend von dem geöffneten Zustand gemäß der in der Figur rechten Position der beweglichen Formaufspannplatte 2 wird diese mittels bekannter Antriebsmittel in Richtung auf die feststehende Formaufspannplatte 1 verfahren. Dabei taucht die Säule 3 durch die bewegliche Formaufspannplatte 2 hindurch und gerät in den Raum zwischen den sich in der Offenstellung befindlichen Verriegelungselementen 7a und 7b. Die Position der Säule 3 wird dabei einerseits von dem hydraulisch blockierten Schließkraftzylinder 8 gehalten und außerdem mechanisch fixiert, indem die Bremse 19 aktiviert ist und die Bremsscheibe 18 drehfest gehalten wird. Wenn die bewegliche Formaufspannplatte 2 sich in einer für die Verriegelung geeigneten bzw. korrekte Position befindet, können die Verriegelungselemente 7a und 7b in die Nuten 4 der Säule 3 eingefahren und die Verriegelungsstellung erreicht werden. Nunmehr befindet sich die bewegliche Formaufspannplatte 2 in der linken Position in der Figur, wie sie mit den gestrichelten Linien dargestellt ist. Ausgehend von der Verriegelungsstellung kann Schließkraft aufgebaut werden und die Zuhaltephase der Schließeinheit beginnen, wobei in dem Druckraum 10a ein für die Schließkraft erforderlicher Druck erzeugt wird. Da dabei die Säule 3 um eine Wegstrecke nach links in dem Schließkraftzylinder bewegt wird, ist zuvor die Bremse 19 zu lösen, so dass bei einer axialen Bewegung der Mutter 14 eine Drehbewegung der Spindel 14 ermöglicht wird. Eine hohe Gewindesteigung bei Spindel und Mutter erleichtert die Drehbewegung der Spindel. Die Spindel 15 kann bei ihrer Drehbewegung in das Sackloch 21 der Säule 3 eintauchen. Nach Beendigung der Zuhaltephase der Schließeinheit kann der Druckraum 10a entlastet und in dem Druckraum 10b die für das Losreissen der Formaufspannplatten voneinander erforderliche Losreisskraft bzw. der dafür erforderliche Druck erzeugt werden. Zeitgleich oder im Anschluss daran können die Verriegelungselemente 7a und 7b aus der Verriegelungsstellung in die Offenstellung und nachfolgend die bewegliche Formaufspannplatte 2 von der feststehenden Formaufspannplatte 1 weg verfahren werden, bis wieder der Ausgangszustand erreicht worden ist. Gegebenenfalls kann beim Auffahren der Schließeinheit die Bremse aktiviert und die Spindel mechanisch festgestellt werden.

Während vorliegend die Mutter drehfest mit dem Kolben bzw. der Säule ist und die Spindel dreht, kann auch eine umgekehrte Anordnung der Spindel-Mutter-Kombination vorgesehen werden. In diesem Fall ist die Mutter drehbar in dem Schließkraftzylinder 8 gelagert und teilweise aus diesem herausgeführt und mit einer Bremsscheibe versehen. Die Spindel ist hingegen drehfest mit dem Kolben bzw. der Säule verbunden. Es kommt also lediglich darauf an, dass die Rotation des rotierenden Teils der Spindel-Mutter-Kombination blockiert und freigegeben werden kann.

Die in der Figur 2 dargestellte Ausführungsform einer erfindungsgemäßen Schließeinheit unterscheidet sich von derjenigen aus der Figur 1 lediglich im Hinblick auf die Feststelleinrichtung. Anstelle der oben beschriebenen Spindel-Mutter-Kombination mit Arretierung über Bremsscheibe und Bremse sind nunmehr direkt auf die Säule einwirkende Klemmelemente vorgesehen. Es können Klemmvorrichtungen 30 an der feststehenden Formaufspannplatte 1 vorgesehen werden, beispielsweise in Form von hydraulisch betätigbaren und direkt auf die Säule 3 aufsetzbaren und mit diesen verklemmbaren Klemmelementen 31. Alternativ dazu oder auch ergänzend dazu können Klemmvorrichtungen 40 an dem Schließkraftzylinder 8 vorgesehen werden, deren Klemmelemente 42 mit einem aus dem Schließkraftzylinder 8 herausgeführten und mit der Säule 3 fest verbundenen Stangenelement 41 verklemmbar sind. Hierbei kann es sich beispielsweise um hydraulisch betätigbare Klemmelemente 42 handeln.

Die Betriebsweise ist analog zu der Betriebsweise des ersten Ausführungsbeispiels. Lediglich die Fixierung der Position der Säule 3 beim Verfahren der beweglichen Formaufspannplatte 2 erfolgt auf andere Art und Weise. Neben der Fixierung durch den hydraulisch blockierten Schließkraftzylinder 8 erfolgt eine mechanische Fixierung der Position, indem die Klemmvorrichtungen 30 bzw. 40 betätigt werden und die Klemmelemente 31 bzw. 41 mit der Säule 3 verklemmt werden. In Betriebsphasen, in denen eine axiale Bewegung der Säule 3 zugelassen werden muss, wie zum Beispiel beim Schließkraftaufbau, sind die Klemmelemente 31 bzw. 41 natürlich von den Säulen zu lösen.

Die mechanische Fixierung der Lage der Säulen relativ zu dem jeweiligen Schließkraftzylinder erfolgt derart, dass das Spiel SP zwischen den Kontakt- und Kraftübertragungsflächen 25 der Verriegelungselemente 7a, 7b einerseits und den Kontakt- und Kraftübertragungsflächen 26 der Säulen 3 andererseits möglichst gering gehalten wird. Im Betrieb der Schließeinheit kann nach dem Schließkraftabbau die Lage der Säule 3 relativ zum Schließkraftzylinder 8 mechanisch fixiert werden, gegebenenfalls unter Einstellung eines minimalen Spiels zwischen den Kontakt- und Kraftübertragungsflächen 25 und 26. Danach können die Verriegelungelemente 7a, 7b aus den Säulen ausgefahren und die Schließeinheit aufgefahren werden. Nach dem erneuten Zufahren befinden sich die Säulen 3 wieder an der richtigen Position bzw. an einer optimalen Position, in der die Verriegelungelemente 7a, 7b erneut in die Säulen eingefahren werden können. Sobald die Verriegelungselemente 7a, 7b ihre Verriegelungsstellung eingenommen haben oder zeitlich parallel zum Einfahren der Verriegelungselemente in die Säulen, kann die mechanische Fixierung der Säulen gelöst werden, so dass diese wieder relativ zum Schließkraftzylinder bewegbar sind und nunmehr Schließkraft aufgebaut werden kann. Da kein oder nahezu kein Spiel SP zwischen den Kraftübertragungsflächen 25 und 26 vorliegt, ergibt sich keine unnötige Verzögerung beim Schließkraftaufbau.

In Abwandlung der hier beschriebenen Ausführungsbeispiele können die Schließkraftzylinder mit den Säulen sowie die Mittel zum Fixieren der Position der Säulen relativ zum Schließkraftzylinder auch an der beweglichen Formaufspannplatte und die Verriegelungselemente an der feststehenden Formaufspannplatte vorgesehen werden.

### Bezugszeichenliste

- 1: Feststehende Formaufspannplatte
- 2: Bewegliche Formaufspannplatte
- 3: Säule
- 4: Nut
- 5: Steg
- 6: Gleitbuchse
- 7a, 7b: Verriegelungselemente
- 8: Schließkraftzylinder
- 9: Kolben
- 10a, 10b: Druckräume
- 11a, 11b: Druckmittelzu- und abführöffnungen
- 12, 13: Dichtringe
- 14: Mutter
- 15: Spindel
- 16: Dichtring
- 17: Drehlager
- 18: Bremsscheibe
- 19: Bremse
- 20: Inkrementalgeber
- 21: Sackloch
- 25, 26: Kontakt- und Kraftübertragungsflächen
- 30: Klemmvorrichtung
- 31: Klemmelement
- 40: Klemmvorrichtung
- 41: Stangenelement
- 42: Klemmelement

## Patentansprüche

1. Schließeinheit für eine Spritzgießmaschine mit einer feststehenden (1) und einer beweglichen Formaufspannplatte (2), mit Säulen (3) zwischen den beiden Formaufspannplatten (1, 2), mit Verriegelungselementen (7a, 7b), die in die Säulen (3) ein- und ausgefahren werden können, wobei in der eingefahrenen Stellung der Verriegelungselemente (7a, 7b) eine Verriegelungsstellung vorliegt, bei der die Schließeinheit mit einer Schließkraft beaufschlagt werden kann, und wobei bei der ausgefahrenen Stellung der Verriegelungselemente (7a, 7b) eine Offenstellung vorliegt, bei der die Säulen (3) frei gegenüber den Verriegelungselementen (7a, 7b) bewegbar sind, und mit Schließkraftzylindern (8), in die jeweils ein Ende einer Säule (3) hineinragt und dort als Kolben (9) ausgebildet ist, wobei zumindest die Schließkraftseite des Kolbens mit einem Druckmittel beaufschlagbar ist, wobei vorzugsweise beide Seiten des Kolbens (9) mit einem Druckmittel beaufschlagbar sind,
**dadurch gekenntzeichnet, dass**
eine Feststelleinrichtung vorgesehen ist, mit der die Position der Säulen (3) relativ zu dem jeweiligen Schließkraftzylinder (8) durch eine kraftschlüssige Verbindung fixiert werden kann.

2. Schließeinheit nach Anspruch 1,
**dadurch gekennzeichnet, dass**
an der mit den Schließkraftzylindern (8) versehenen Formaufspannplatte (1) mit den Säulen (3) verklemmbare Klemmelemente (31) vorgesehen sind.

3. Schließeinheit nach Anspruch 1 oder 2,
**dadurch gekennzeichnet, dass**
an dem Schließkraftzylinder (8) Klemmvorrichtungen (40) vorgesehen sind, deren Klemmelemente (42) mit einem aus dem Schließkraftzylinder (8) herausgeführten und mit der Säule (3) fest verbundenen Stangenelement (41) verklemmbar sind.

4. Schließeinheit nach Anspruch 1,
**dadurch gekennzeichnet, dass**
die Kolben (9) jeweils mit einer Spindel-Mutter-Kombination (14, 15) versehen sind, wobei entweder die Mutter (14) drehfest mit dem Kolben (9) verbunden ist und die Spindel (15) bei einer Bewegung der Säule (3) relativ zu dem Schließkraftzylinder (8) entlang der Längsachse der Säule (3) in Rotation versetzt wird, oder wobei die Spindel (15) drehfest mit dem Kolben (9) verbunden ist und die Mutter (14) bei einer Bewegung der Säule (3) relativ zu dem Schließkraftzylinder (8) entlang der Längsachse der Säule (3) in Rotation versetzt wird, und wobei eine Blockiereinrichtung (18, 19) vorgesehen ist, mit der die Rotation des rotierenden Teils der jeweiligen Spindel-Mutter-Kombination blockiert werden kann.

5. Schließeinheit nach Anspruch 4,
**dadurch gekennzeichnet, dass**
die Blockierreinrichtung eine mit dem rotierenden Teil der jeweiligen Spindel-Mutter-Kombination (14,15) drehfest verbundene und mit diesem Teil mitrotierende Bremsscheibe (18) und eine die Bremsscheibe (18) arretierbare Bremse (19) umfasst.

6. Schließeinheit nach Anspruch 4 oder 5,
**dadurch gekenntzeichnet, dass**
ein Inkrementalgeber (20) an dem rotierenden Teil der Spindel-Mutter-Kombination (14, 15) vorgesehen ist.

7. Schließeinheit nach einem der Ansprüche 4 bis 6,
**dadurch gekennzeichnet, dass**
die Mutter (14) der jeweiligen Spindel-Mutter-Kombination (14, 15) drehfest mit dem Kolben (9) bzw. der Säule (3) verbunden ist, und dass in dem den Kolben (3) aufweisenden Endabschnitt der Säule (3) eine Ausnehmung (21) vorgesehen ist, in die die Spindel (15) beim Verfahren der Säule (3) innerhalb des Schließkraftzylinders (8) eintauchen kann.

8. Schließeinheit nach einem der vorstehenden Ansprüche,
**dadurch gekennzeichnet, dass**
die Schließkraftzylinder (8) an der feststehenden Formaufspannplatte (1) und die Verriegelungselemente (7a, 7b) an der beweglichen Formaufspannplatte (2) vorgesehen sind.

## Claims

1. A closing unit for an injection molding machine comprising a stationary (1) and a movable platen (2), comprising columns (3) between the two platens (1, 2), comprising locking elements (7a, 7b), which can be retracted into and extended out of the columns (3), wherein, in the retracted position of the locking elements (7a, 7b), a locked position is at hand, in the case of which a closing force can be applied to the closing unit, and wherein, in the extended position of the locking elements (7a 7b), an open position is at hand, in the case of which the columns (3) can be moved freely relative to the locking elements (7a, 7b), and comprising closing force cylinders (8), into which one end of a column (3) projects in each case and is embodied as piston (9) at that location, wherein at least the closing force side of the piston can be acted upon by a pressure medium, wherein preferably both sides of the piston (9) can be acted upon with a pressure means,
**characterized in that**
a fixing device is provided, by means of which the position of the column (3) can be fixed relative to the respective closing force cylinder (8) by means of a non-positive connection.

2. The closing unit according to claim 1,
**characterized in that**
clamping elements (31), which can be clamped to the columns (3), are provided on the platen (1), which is provided with the closing force cylinders (8).

3. The closing unit according to claim 1 or 2,
**characterized in that**
clamping devices (40), the clamping elements (42) of which can be clamped to a rod element (41), which is guided out of the closing force cylinder (8) and which is fixedly connected to the column (3), are provided on the closing force cylinder (8).

4. The closing unit according to claim 1,
**characterized in that**
the pistons (9) are in each case provided with a spindle-nut combination (14, 15), wherein either the nut (14) is connected to the piston (9) in a rotationally fixed manner and the spindle (15) is set in rotation in response to a movement of the column (3) relative to the closing force cylinder (8) along the longitudinal axis of the column (3), or wherein the spindle (15) is connected to the piston (9) in a rotationally fixed manner, and the nut (14) is set in rotation in response to a movement of the column (3) relative to the closing force cylinder (8) along the longitudinal axis of the column (3), and wherein a blocking device (18, 19) is provided, by means of which the rotation of the rotating part of the respective spindle-nut combination can be blocked.

5. The closing unit according to claim 4,
**characterized in that**
the blocking device comprises a brake disk (18), which is connected to the rotating part of the respective spindle-nut combination (14, 15) in a rotationally fixed manner and which rotates with this part, and a brake (19), which can block the brake disk (18).

6. The closing unit according to claim 4 or 5,
**characterized in that**
an incremental encoder (20) is provided on the rotating part of the spindle-nut combination (14, 15).

7. The closing unit according to one of claims 4 to 6,
**characterized in that**
the nut (14) of the respective spindle-nut combination (14, 15) is connected to the piston (9) or the column (3), respectively, in a rotationally fixed manner, and that a recess (21), into which the spindle (15) can dip when moving the column (3) within the closing force cylinder (8), is provided in the end section of the column (3), which has the piston (3).

8. The closing unit according to one of the preceding claims,
**characterized in that**
the closing force cylinders (8) are provided on the stationary platen (1) and the locking elements (7a, 7b) are provided on the movable platen (2).

## Revendications

1. Unité de fermeture pour une machine de moulage par injection comprenant des plaques de serrage de moule fixe (1) et mobile (2), comprenant des colonnes (3) entre les deux plaques de serrage de moule (1, 2), comprenant des éléments de verrouillage (7a, 7b) qui peuvent être entrés dans les, et sortis des, colonnes (3), dans lequel lorsque les éléments de verrouillage (7a, 7b) sont dans la position rentrée, il y a une position de verrouillage dans laquelle l'unité de fermeture peut recevoir une force de fermeture, et dans lequel lorsque les éléments de verrouillage (7a, 7b) sont dans la position sortie, il y a une position ouverte, dans laquelle les colonnes (3) sont mobiles librement par rapport aux éléments de verrouillage (7a, 7b), et comprenant des cylindres de force de fermeture (8) dans lesquels respectivement une extrémité d'une colonne (3) pénètre et y est formée en tant que piston (9), dans lequel au moins le côté force de fermeture du piston est alimenté par un moyen de pression, dans lequel de préférence les deux côtés du piston (9) peuvent être alimentés par un moyen de pression,
**caractérisée en ce**
**qu'**un dispositif de stationnement est prévu, avec lequel la position des colonnes (3) par rapport au cylindre de force de fermeture (8) respectif peut être fixée par une liaison par adhérence de forces.

2. Unité de fermeture selon la revendication 1,
**caractérisée en ce que**
des éléments de serrage (31) pouvant être coincés avec les colonnes (3) sont prévus sur la plaque de serrage de moule (1) dotée des cylindres de force de fermeture (8).

3. Unité de fermeture selon la revendication 1 ou 2,
**caractérisée en ce que**
des dispositifs de serrage (40) sont prévus sur le cylindre de force de fermeture (8), dont les éléments de serrage (42) peuvent être coincés avec un élément de tige (41) relié fixement à la colonne (3) et sorti du cylindre de force de fermeture (8).

4. Unité de fermeture selon la revendication 1,
**caractérisée en ce que**
les pistons (9) sont respectivement dotés d'une combinaison broche-écrou (14, 15), dans lequel soit l'écrou (14) est relié fixe en rotation au piston (9) et la broche (15) est décalée en rotation le long de l'axe longitudinal de la colonne (3) lors d'un mouvement de la colonne (3) par rapport au cylindre de force de fermeture (8), dans lequel soit la broche (15) est reliée fixe en rotation au piston (9) et l'écrou (14) est décalé en rotation le long de l'axe longitudinal de la colonne (3) lors d'un mouvement de la colonne (3) par rapport au cylindre de force de fermeture (8), et dans lequel un dispositif de blocage (18, 19) est prévu, avec lequel la rotation de la partie rotative de la combinaison broche-écrou peut être bloquée.

5. Unité de fermeture selon la revendication 4,
**caractérisée en ce que**
le dispositif de blocage comprend un disque de frein (18) relié fixe en rotation à la partie rotative de la combinaison broche-écrou (14, 15) et tournant avec cette pièce, et un frein (19) pouvant bloquer le disque de frein (18).

6. Unité de fermeture selon la revendication 4 ou 5,
**caractérisée en ce**
**qu'**un codeur incrémental (20) est prévu sur la partie rotative de la combinaison broche-écrou (14, 15).

7. Unité de fermeture selon l'une des revendications 4 à 6,
**caractérisée en ce que**
l'écrou (14) de la combinaison broche-écrou (14, 15) respective est relié fixe en rotation au piston (9), respectivement à la colonne (3), et que dans le tronçon d'extrémité de la colonne (3) présentant le piston (3), il est prévu un évidement (21) dans lequel la broche (15) peut plonger lorsque la colonne (3) est déplacée à l'intérieur du cylindre de force de fermeture (8).

8. Unité de fermeture selon l'une des revendications précédentes,
**caractérisée en ce que**
les cylindres de force de fermeture (8) sont prévus sur la plaque de serrage de moule fixe (1) et les éléments de verrouillage (7a, 7b) sont prévus sur la plaque de serrage de moule mobile (2).
